# FASCICULE DE BREVET EUROPEEN

(11) **EP 1 514 674 B1**
(45) Date de publication et mention de la délivrance du brevet: **02.11.2006**
(21) Numéro de dépôt: 04020027.1
(22) Date de dépôt: 24.08.2004
(51) Int. Cl.: B29D 30/12, B22D 13/10, B29D 30/10, B29C 33/52

(54) **Méthode de fabrication d'un noyau pour le moulage d'un pneumatique, pneumatique et dispositif de fabrication d'un pneumatique correspondants**
Verfahren zur Herstellung von zur Herstellung von Reifen dargestellten Formkernen bzw. hergestellte Reifen und Vorrichtung zur Reifenherstellung
Manufacturing method for a core for molding of tyre, as well as correspondingly manufactured tyre and apparatus for tyre manufacturing

(30) Priorité: 05.09.2003 FR 0310571
(43) Date de publication de la demande: 16.03.2005
(73) Titulaire: Société de Technologie Michelin, 63000 Clermont-Ferrand (FR); MICHELIN Recherche et Technique S.A., 1763 Granges-Paccot (CH)
(72) Inventeur: Soulalioux, Alain, 43100 Saint-Beauzire (FR)
(74) Mandataire: Lasson, Cédric Y. M.

(56) Documents cités:
- EP-A- 0 685 321
- EP-A- 0 822 047
- DE-A- 1 604 528
- DE-A- 2 417 691
- FR-A- 2 665 103
- GB-A- 1 139 643
- US-A- 3 751 551
- US-A- 3 902 836
- US-A- 5 415 373
- US-B1- 6 336 985

## Description

La présente invention concerne la fabrication de pneumatiques. Plus précisément, elle se rapporte aux procédés dans lesquels on utilise un noyau sur lequel on confectionne un pneumatique cru, l'ensemble étant ensuite placé dans un moule de vulcanisation.

Une particularité de ce type de procédés est l'étape finale de démoulage du noyau (appelé aussi "dénoyautage"). En effet, le noyau (autour duquel le pneumatique est confectionné puis moulé) doit pouvoir être extrait du pneumatique en fin de vulcanisation sans endommager ni déformer durablement ce pneumatique.

Pour ce faire, il est par exemple connu d'utiliser un noyau rigide constitué de plusieurs éléments qui peuvent se déplacer (radialement) les uns par rapport aux autres. On peut alors extraire, un à un, lesdits éléments du pneumatique moulé. Cette technique est limitée par le fait que lesdits éléments doivent avoir des dimensions telles qu'ils puissent être extraits radialement de la cavité toroïdale du pneumatique cuit. En pratique, une telle technique ne peut donc s'appliquer de façon satisfaisante que pour les pneumatiques ayant une hauteur de flancs limitée par rapport au diamètre intérieur. Par exemple, un pneumatique à la dimension 225/45/17 pourra beaucoup plus facilement être démoulé d'un tel noyau qu'un pneumatique à la dimension 225/75/15.

Par ailleurs, lorsque l'on vulcanise au moyen d'un noyau rigide constituant une partie du moule à l'intérieur duquel est contenu le pneumatique, la pression de vulcanisation ne peut être contrôlée indépendamment de la température.

Il est également connu de confectionner des noyaux à partir de particules solides (par exemple du sable ou des billes de verre) que l'on manipule comme des fluides, que l'on maintient en forme en appliquant une dépression et que l'on peut extraire après vulcanisation par exemple par pompage. Cette technique comporte également ses limitations car elle impose une circulation des particules solides. Cette technique génère en particulier des problèmes de frottements et d'usure des outillages et elle ne donne pas non plus entière satisfaction sur le plan des échanges thermiques lors de la vulcanisation.

L'objectif de l'invention est de pallier au moins certains des inconvénients précités, afin d'améliorer l'aptitude d'un noyau à mouler des pneumatiques d'une grande qualité, notamment d'une qualité qui reste constante après de nombreux cycles de moulage, afin également de simplifier le procédé global et en particulier de réduire l'encombrement au sol des installations industrielles.

L'invention propose une méthode de fabrication d'un noyau creux pour le moulage d'un pneumatique, ledit noyau comprenant une membrane annulaire souple, ladite méthode comprenant les étapes suivantes:
■ Placer la membrane dans une forme de rotomoulage,
■ Introduire à l'intérieur de ladite membrane un matériau fusible dont le point de fusion est compris entre 80 et 250°C, ledit matériau étant introduit à l'état liquide,
■ Rotomouler afin d'obtenir un noyau creux essentiellement constitué d'une croûte dudit matériau dans son état solide.

De préférence, le matériau fusible est un métal ou un alliage métallique ou une cire ayant son point de fusion entre 100 et 160°C.

De préférence encore, la méthode de l'invention comprend en outre une étape consistant à appliquer une dépression à l'intérieur de la membrane après que ladite croûte a été formée.

L'invention concerne également une méthode de fabrication d'un pneumatique comprenant une telle méthode de fabrication d'un noyau. Ainsi, chaque cycle de fabrication d'un pneumatique inclut ou est précédé d'un cycle de fabrication d'un noyau.

De préférence, la méthode de fabrication d'un pneumatique selon l'invention comprend en outre une étape dans laquelle on remplit ledit noyau d'un fluide caloporteur dont la température est supérieure audit point de fusion dudit matériau fusible. De préférence encore, on contrôle la pression du fluide caloporteur afin d'augmenter le volume du noyau pendant le moulage final du pneumatique.

La méthode de fabrication d'un pneumatique selon l'invention peut en outre comprendre une étape consistant à vider au moins partiellement la membrane et une étape consistant ensuite à extraire le noyau du pneumatique moulé.

De préférence, le fluide caloporteur est essentiellement le même matériau fusible que celui constituant la croûte du noyau.

L'invention concerne également un pneumatique obtenu par la méthode selon l'invention.

L'invention concerne également un dispositif pour la fabrication de pneumatiques selon la méthode de l'invention comprenant une jante, ladite jante portant une membrane souple, ledit dispositif comprenant des moyens de rotomoulage permettant de former une croûte sous ladite membrane.

D'autres avantages de l'invention seront également présentés dans la description de différents modes de réalisation des figures suivantes:
La figure 1 est une vue en coupe radiale d'une partie du noyau selon l'invention avant son rotomoulage. La figure 2 est une vue en coupe radiale du noyau à la fin de l'étape de rotomoulage.
La figure 3 est une vue en coupe radiale du noyau sur lequel est assemblé le pneumatique cru.
La figure 4 est une vue en coupe radiale de l'étape de moulage du pneumatique.
La figure 5 est une vue en coupe radiale de l'étape précédant le dénoyautage du pneumatique moulé.

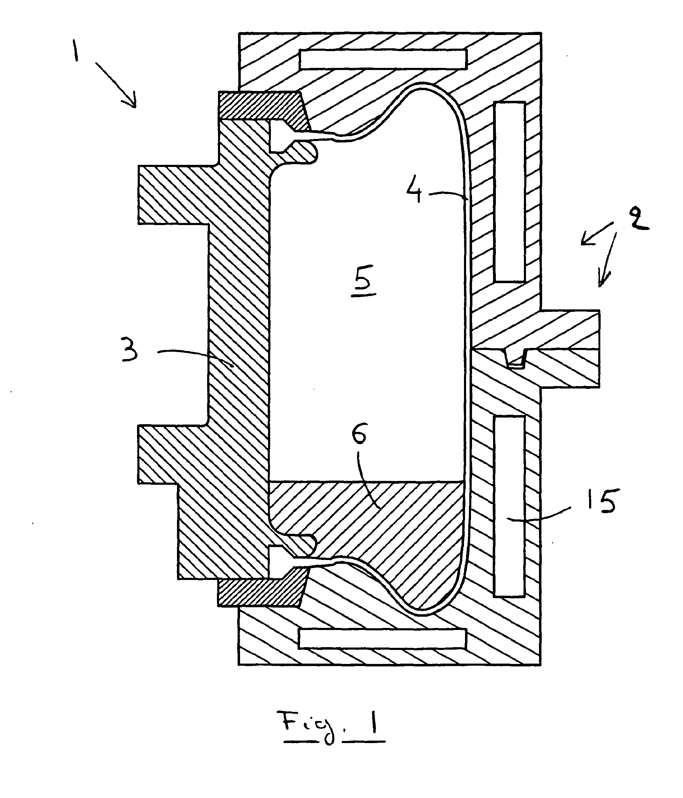

Sur la figure 1, on a représenté en coupe un noyau 1 placé dans une forme de rotomoulage 2. Le noyau 1 comprend une jante 3 et une membrane déformable 4. La forme 2 est ici fermée, c'est à dire qu'elle est prête pour l'opération de rotomoulage du noyau. La membrane 4 épouse le profil de la forme 2 sous l'effet par exemple d'une surpression dans son volume intérieur 5 par rapport à l'atmosphère extérieure. Sur cette figure, le volume annulaire 5 défini entre la membrane 4 et la jante 3 est partiellement rempli d'un matériau fusible 6 à l'état liquide. On a représenté arbitrairement le noyau dans une position où son axe est vertical afin de visualiser les différents éléments et en particulier le matériau fusible 6 dans son état liquide. Des canaux 15 peuvent permettre de contrôler la température de la forme 2. On a omis de représenter les moyens d'alimentation en matériau fusible 6 ainsi que les moyens de contrôle de la pression interne du noyau 1.

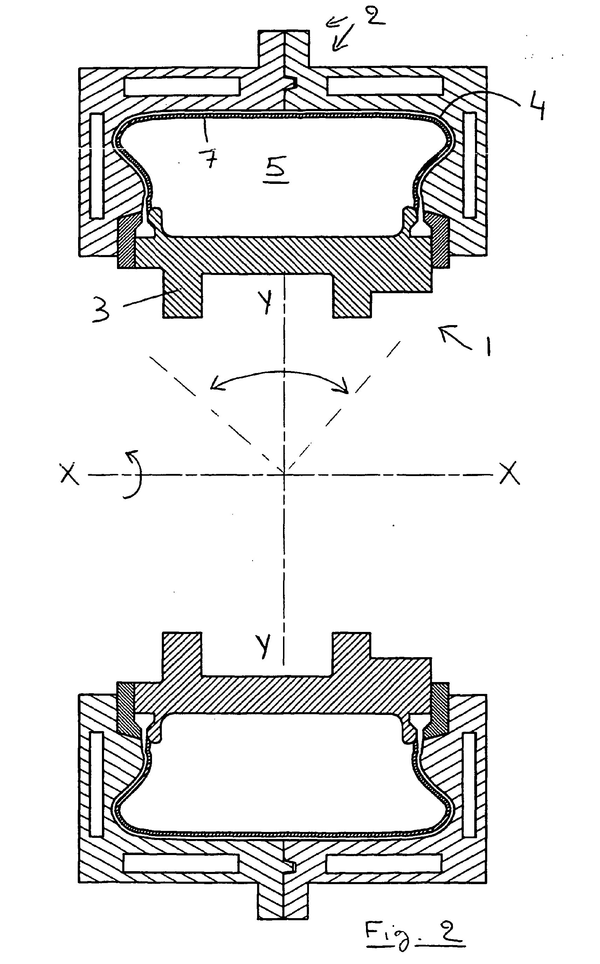

L'opération de rotomoulage peut être menée de manière conventionnelle, c'est à dire en combinant de manière connue en soi un mouvement de rotation de l'ensemble constitué par le noyau 1 et la forme 2 autour de son axe XX et des oscillations du plan YY du noyau de part et d'autre d'un plan vertical (voir figure 2). Le rotomoulage permet de répartir une certaine épaisseur du matériau fusible 6 qui en refroidissant forme une croûte 7 de matériau solidifié. L'homme du métier du rotomoulage sait obtenir un moulage satisfaisant en adaptant les différents paramètres du procédé notamment en fonction de la quantité et des caractéristiques du matériau fusible employé et de la température des éléments du noyau et de la forme 2. A titre exemplatif, des oscillations du plan YY de l'ordre de 45° de part et d'autre de la verticale ont permis d'obtenir une répartition d'épaisseur satisfaisante.

Les moyens de rotomoulage ne sont pas complètement représentés ici. On a seulement fait figurer la forme de rotomoulage 2 en omettant les moyens (connus en eux-mêmes) permettant une rotation selon deux axes différents.

Lorsque l'opération de rotomoulage est terminée et que le matériau fusible 6 est suffisamment refroidi et donc suffisamment rigide, on ouvre la forme 2 et on en extrait le noyau 1. On dispose alors d'un noyau rigide sur lequel on peut assembler (on dit aussi "confectionner") un pneumatique cru (c'est à dire un pneumatique prêt à être vulcanisé). Alternativement au rotomoulage qui est une caractéristique essentielle de la présente invention, on pourrait envisager d'autres manières d'obtenir un noyau creux en aveugle comme par exemple par pulvérisation ou par coulée puis vidage partiel d'un matériau fusible adapté.

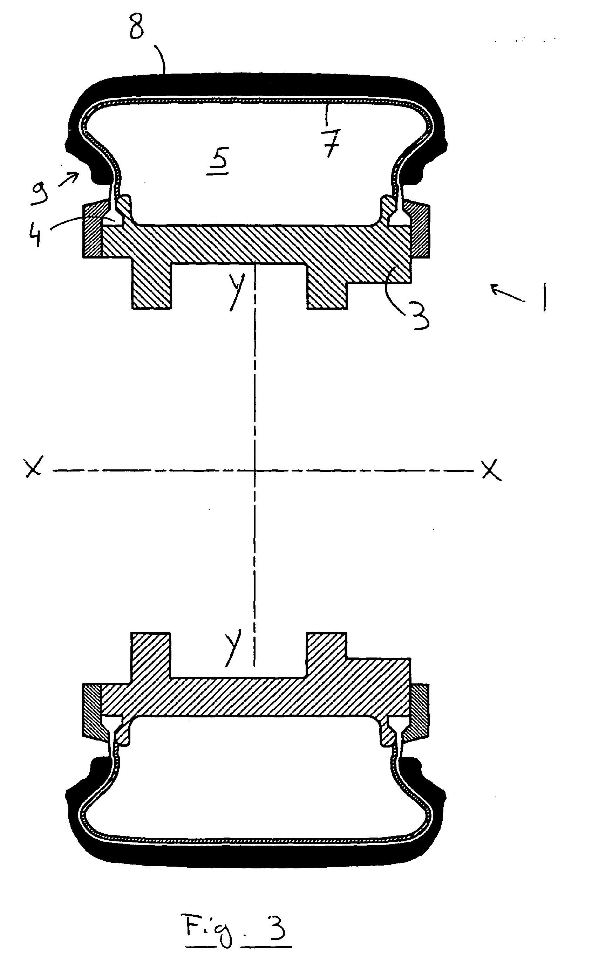

La figure 3 représente un pneumatique cru 8 assemblé sur le noyau 1 selon l'invention. De préférence, on soumet, au moins pour la durée de l'assemblage, le volume intérieur 5 à une dépression afin de maintenir la membrane 4 plaquée contre la croûte 7. Ceci est particulièrement utile dans les parties creuses du profil comme la zone basse 9 du pneumatique. La confection peut être faite de nombreuses manières différentes, par exemple en déposant et/ou en enroulant successivement de manière connue en soi les constituants du pneumatique cru sur le noyau 1.

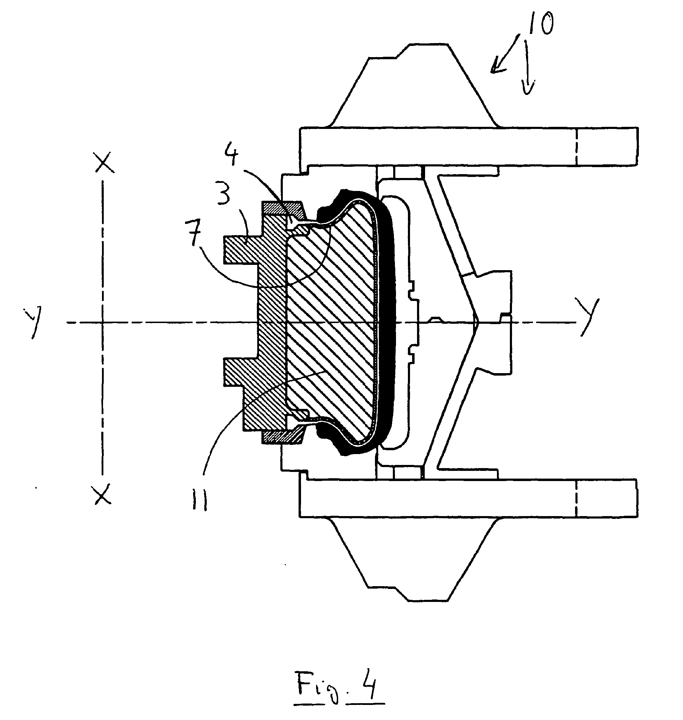

Lorsque le pneumatique cru 8 est prêt à être moulé, on place l'ensemble noyau + pneumatique cru dans un moule de vulcanisation 10 (voir figure 4). De préférence, un fluide caloporteur 11 vient alors emplir la cavité interne du noyau afin d'une part d'apporter une énergie calorifique utile à la vulcanisation du pneumatique et d'autre part de faire fondre la croûte (7) de matériau fusible solidifié.

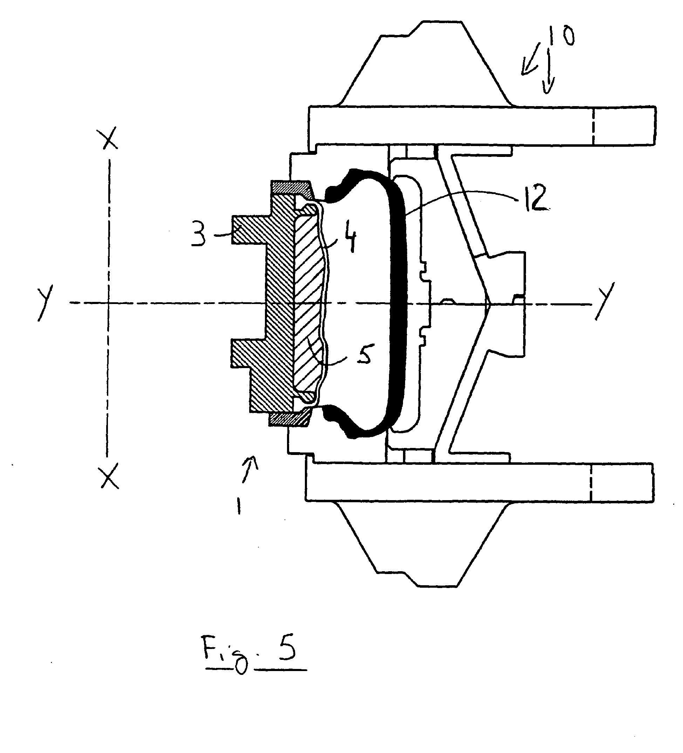

Ainsi, lorsque l'opération de moulage est terminée, on peut vider le volume intérieur 5 de tout ou partie du matériau fusible et du fluide caloporteur qu'il contient afin de réduire suffisamment l'encombrement du noyau pour pouvoir l'extraire du pneumatique moulé 12. C'est l'étape que représente la figure 5 sur laquelle la membrane 4 est souple et dégonflée en vue du dénoyautage. Le noyau 1 tel que représenté à la figure 5 peut, après son extraction, subir un nouveau cycle de formage par rotomoulage et participer à la fabrication d'un nouveau pneumatique. On peut utiliser avantageusement plusieurs noyaux de moulage sur chaque ligne de fabrication de pneumatiques.

Le fluide caloporteur 11 peut être par exemple une huile ou de la vapeur portée à une température adéquate en fonction de la quantité d'énergie absorbée par la vulcanisation du pneumatique, de la masse de matériau fusible 6 et des caractéristiques du matériau fusible 6 (en particulier ses point de fusion, chaleur latente de fusion et chaleur spécifique). Le fluide caloporteur 11 peut en outre circuler en boucle entre le volume intérieur 5 du noyau et des moyens de chauffage afin d'apporter progressivement l'énergie calorifique nécessaire au cycle de moulage du pneumatique.

Lorsque l'on vide le noyau, le fluide caloporteur 11 emporte avec lui tout ou partie du matériau fusible 6 qui se trouve alors dans sa forme liquide. On peu ensuite, par exemple par gravité, séparer le fluide caloporteur du matériau fusible en prévision du cycle de fabrication suivant. Un avantage de l'utilisation d'une huile ou de tout autre matériau qui demeure à l'état fluide à la température ambiante est qu'elle permet une manipulation aisée sans contraintes particulières notamment sur le plan de la connectique. La vapeur d'eau peut également constituer un fluide caloporteur 11 intéressant.

Selon une variante intéressante de l'invention, le fluide caloporteur 11 peut également être constitué du même matériau que le matériau fusible 6. Selon cette alternative, il n'est alors plus nécessaire de prévoir un système de séparation du fluide et du matériau fusible.

De préférence, le matériau fusible 6 est un métal ou alliage métallique à bas point de fusion, par exemple compris entre 100 et 160 °C, par exemple un alliage contenant en proportions adaptées un ou plusieurs des métaux suivants: bismuth, étain, plomb, zinc, cadmium.

De plus, le matériau fusible 6 peut inclure des particules, ou des billes d'un matériau supplémentaire et différent dont le point de fusion est plus élevé afin de demeurer solide pendant tout le cycle du noyau. L'intérêt d'une telle inclusion est de réduire la quantité d'énergie nécessaire pour rendre liquide le matériau fusible 6. En effet, même si les billes ou particules supplémentaires demeurent solides, la fusion du matériau fusible 6 permet de mettre en oeuvre le procédé de l'invention. De préférence, ledit matériau supplémentaire a une masse volumique proche de celle du matériau fusible 6 afin que ce mélange soit le plus homogène possible.

On comprend que selon l'invention le noyau rigide et creux (constitué du matériau fusible dans sa forme solide) pour l'assemblage du pneumatique peut devenir, lorsqu'il est rempli du fluide caloporteur à une température adéquate, un noyau sensiblement plein et souple avec tous les avantages que cela comporte pour le moulage et le démoulage.

On peut grâce à l'invention faire varier la pression interne et le volume du noyau pendant le moulage afin par exemple de parfaire le moulage des détails de la bande de roulement et/ou de mettre la structure renforçante du pneumatique sous tension (notamment les renforts textiles ou métalliques de la carcasse et du sommet du pneumatique).

De préférence, pendant le remplissage du noyau on maintient une dépression sous la membrane 4 afin que le remplissage en fluide caloporteur 11 soit suffisant et qu'ainsi la totalité de la croûte soit fondue ou à tout le moins suffisamment affaiblie pour se disloquer et être ensuite intégrée à la masse liquide.

De préférence, les caractéristiques, la température et le débit du fluide caloporteur sont choisis de manière à ce que le remplissage du noyau soit terminé ou pratiquement terminé avant que la croûte ne cède en particulier sous l'effet de la dépression régnant sous la membrane 4.

Dans la présente demande, lorsque l'on utilise les adjectifs "liquide" ou "fluide" pour décrire l'état physique du matériau fusible 6, il s'agit d'un état suffisamment fluide pour permettre par exemple que le matériau s'écoule ou qu'il soit pompé. En pratique, le matériau peut donc être qualifié de liquide même s'il demeure des parties solides de taille réduite.

Alternativement, on peut utiliser la méthode de fabrication d'un noyau selon l'invention dans des procédés de moulage de pneumatiques par injection ou transfert.

D'une façon générale, le terme "pneumatique" employé dans le présent mémoire couvre naturellement tout type de bandage élastique, pneumatique ou non pneumatique, l'invention concernant essentiellement le moulage de ce "pneumatique" et non son fonctionnement.

## Revendications

1. Méthode de fabrication d'un noyau creux pour le moulage d'un pneumatique, ledit noyau (1) comprenant une membrane annulaire souple (4), ladite méthode comprenant les étapes suivantes:
■ Placer la membrane dans une forme (2) de rotomoulage,
■ Introduire à l'intérieur de ladite membrane un matériau fusible (6) dont le point de fusion est compris entre 80 et 250°C, ledit matériau étant introduit à l'état liquide,
■ Rotomouler afin d'obtenir un noyau creux essentiellement constitué d'une croûte (7) dudit matériau dans son état solide.

2. Méthode selon la revendication 1 dans laquelle ledit matériau fusible est un métal ou un alliage métallique ayant son point de fusion entre 100 et 160°C.

3. Méthode selon l'une des revendications précédentes comprenant en outre une étape consistant à appliquer une dépression à l'intérieur de la membrane après que ladite croûte a été formée.

4. Méthode de fabrication d'un pneumatique comprenant la méthode de fabrication d'un noyau selon l'une des revendications précédentes.

5. Méthode de fabrication d'un pneumatique selon la revendication 4 comprenant en outre une étape dans laquelle on remplit ledit noyau d'un fluide caloporteur (11) dont la température est supérieure audit point de fusion dudit matériau fusible (6).

6. Méthode de fabrication d'un pneumatique selon la revendication 5 dans laquelle on contrôle la pression du fluide caloporteur afin d'augmenter le volume du noyau pendant le moulage final du pneumatique.

7. Méthode de fabrication d'un pneumatique selon l'une des revendications 4 à 6 comprenant en outre une étape consistant à vider au moins partiellement la membrane et une étape consistant ensuite à extraire le noyau du pneumatique moulé (12).

8. Méthode de fabrication d'un pneumatique selon l'une des revendications 4 à 7 dans laquelle le fluide caloporteur (11) est essentiellement le même matériau fusible (6) que celui constituant la croûte (7) du noyau (1).

9. Dispositif pour la fabrication de pneumatiques selon la méthode de l'une des revendications 4 à 8 comprenant une jante (3), ladite jante portant une membrane souple (4), ledit dispositif comprenant des moyens de rotomoulage permettant de répartir un matériau fusible à l'intérieur de ladite membrane afin de former une croûte (7) sous ladite membrane.

## Claims

1. Method of manufacturing a hollow core for moulding a tyre, said core (1) comprising a flexible annular membrane (4), said method comprising the following steps:
■ placing the membrane in a rotomoulding mould (2),
■ introducing into the interior of said membrane a fusible material (6), the melting point of which is between 80 and 250°C, said material being introduced in the liquid state,
■ rotomoulding so as to obtain a hollow core that essentially consists of a crust (7) of said material in its solid form.

2. Method according to Claim 1, in which said fusible material is a metal or a metal alloy having a melting point of between 100 and 160°C.

3. Method according to one of the preceding claims, moreover comprising a step consisting in applying a negative pressure inside the membrane once said crust has been formed.

4. Method of manufacturing a tyre, comprising the method of manufacturing a core according to one of the preceding claims.

5. Method of manufacturing a tyre according to Claim 4, moreover comprising a step in which said core is filled with a heat transfer fluid (11), the temperature of which is above said melting point of said fusible material (6).

6. Method of manufacturing a tyre according to Claim 5, in which the pressure of the heat transfer fluid is controlled so as to increase the volume of the core during final moulding of the tyre.

7. Method of manufacturing a tyre according to one of Claims 4 to 6, moreover comprising a step consisting in at least partially emptying the membrane and a step consisting in then extracting the core from the moulded tyre (12).

8. Method of manufacturing a tyre according to one of Claims 4 to 7, in which the heat transfer fluid (11) is essentially the same fusible material (6) as that which forms the crust (7) of the core (1).

9. Device for manufacturing tyres using the method of one of Claims 4 to 8, comprising a rim (3), said rim bearing a flexible membrane (4), said device comprising rotomoulding means which make it possible to distribute a fusible material within said membrane so as to form a crust (7) beneath said membrane.

## Patentansprüche

1. Verfahren zur Herstellung eines hohlen Kerns (1) mit einer elastischen ringförmigen Membran (4) zum Formen eines Reifens, das die folgenden Schritte aufweist:
- Platzieren der Membran in einer Form (2) zum Rotationsformen,
- Einführen eines schmelzbaren Stoffes (6) in die Membran, dessen Schmelzpunkt zwischen 80 und 250° liegt, wobei der Stoff in flüssigem Zustand eingeführt wird,
- Rotationsformen zum Erhalt eines hohlen Kerns, der im Wesentlichen aus einer Kruste (7) des Stoffes in seinem festen Zustand besteht.

2. Verfahren nach Anspruch 1, bei dem der schmelzbare Stoff ein Metall oder eine Metalllegierung mit einem Schmelzpunkt zwischen 100 und 160°C ist.

3. Verfahren nach einem der vorhergehenden Ansprüche, das darüber hinaus einen Schritt aufweist, in dem innerhalb der Membran ein Unterdruck erzeugt wird, nachdem die Kruste gebildet wurde.

4. Verfahren zur Herstellung eines Reifens, welches das Verfahren zur Herstellung eines Kerns nach einem der vorhergehenden Ansprüche einschließt.

5. Verfahren zur Herstellung eines Reifens nach Anspruch 4, das darüber hinaus einen Schritt aufweist, in dem der Kern mit einem wärmeübertragenden Fluid (11) gefüllt wird, dessen Temperatur höher ist als der Schmelzpunkt des schmelzbaren Stoffes (6).

6. Verfahren zur Herstellung eines Reifens nach Anspruch 5, bei dem der Druck des wärmeübertragenden Fluids kontrolliert wird, um das Volumen des Kerns während des Endformens des Reifens zu erhöhen.

7. Verfahren zur Herstellung eines Reifens nach einem der Ansprüche 4 bis 6, das darüber hinaus einen Schritt aufweist, in dem die Membran zumindest teilweise geleert wird, sowie einen Schritt, in dem dann der Kern vom geformten Reifen (12) abgezogen wird.

8. Verfahren zur Herstellung eines Reifens nach einem der Ansprüche 4 bis 7, bei dem das wärmeübertragende Fluid (11) im Wesentlichen der gleiche schmelzbare Stoff (6) ist wie derjenige, der die Kruste (7) des Kerns (1) bildet.

9. Vorrichtung zur Herstellung von Reifen mit dem Verfahren nach einem der Ansprüche 4 bis 8 mit einer Felge (3), die eine elastische Membran (4) trägt, wobei die Vorrichtung Mittel zum Rotationsformen aufweist, die es ermöglichen, einen schmelzbaren Stoff innerhalb der Membran zu verteilen, um unter der Membran eine Kruste (7) zu bilden.
